# EUROPEAN PATENT APPLICATION

(11) **EP 1 533 733 A1**
(43) Date of publication of application: **25.05.2005**
(21) Application number: 04025052.4
(22) Date of filing: 21.10.2004
(51) Int. Cl.: G06F 17/60

(54) **Active agenda**

(30) Priority: 18.11.2003 US 716086
(71) Applicant: MICROSOFT CORPORATION, Redmond, WA 98052 (US)
(72) Inventor: Lemire, John P., Redmond Washington 98052 (US); Young, Kenneth L., Redmond Washington 98052 (US); Maddin, Matthew D., Redmond Washington 98052 (US); Tiano, Michael O., Redmond Washington 98052 (US); Leban, Roy A., Redmond Washington 98052 (US); Nizar, Shaheeda P., Redmond Washington 98052 (US); Matlock, Stephen J., Redmond Washington 98052 (US)
(74) Representative: Grünecker, Kinkeldey, Stockmair & Schwanhäusser Anwaltssozietät

(57) **Abstract**

An active agenda tool is provided that may be executed at one or more networked computing devices. Each connected active agenda tool includes functionality for displaying an agenda interface and for maintaining agenda item timers. The agenda interface includes an agenda and various interactive controls. The agenda includes a plurality of editable agenda items, each having a corresponding agenda item timer maintained by the agenda tool for recording time dedicated to that agenda item during the meeting. Collateral content, which may be shared among the network computing devices, can be associated with one or more of the agenda items. Agenda data representing the displayed agenda items is changed each time a displayed agenda item is modified during the meeting. Any changes to the agenda data may be distributed to each of the networked computing devices, so that each connected agenda tool can update its agenda during the meeting.

## Description

### Technical Field

The present invention relates to meeting agendas. More particularly the present invention relates to a computer-implemented meeting agenda tool for efficient management of a meeting.

### Background Of The Invention

When a structured meeting is planned, an agenda is typically defined in order to identify meeting topics in an organized manner. Prior to the meeting, the agenda informs prospective meeting attendees as to the topics of discussion, so that a decision whether to attend can be made and any necessary preparations can be undertaken. During the meeting, the agenda may serve to focus the discussions and can assist the meeting facilitator in adhering to time constraints. After the meeting, the agenda can serve as a record of topics that were discussed. A meeting that has no agenda lacks one of the primary tools for maintaining control of a meeting. This is true regardless of whether meeting attendees are located in the same room or collaborating online from different locations.

An agenda typically lists the proposed topics of discussion, often referred to as agenda items, in outline form. The description of each listed agenda item may include such details as the names of the discussion facilitator(s), the objective(s) of the discussion, any documents or exhibits to be referenced during the discussion, the time allocated to the discussion, etc. Agendas have heretofore been written or printed on paper or stored as electronic documents that could be distributed among and displayed by suitably configured computing devices. Prior art agendas were often created using common software tools, such as wordprocessors, spreadsheets, multimedia presentation software. However, prior to the present invention, agendas were static documents that did not provide any meeting management functionality beyond the information they displayed.

Accordingly, there remains a need for a computer-implemented agenda tool that actively manages a meeting by responding to status changes, scheduling follow-ups, and providing ready access collateral content. In the context of on-line meetings, there is a further need for an active agenda tool that provides dynamically updateable agenda data to all connected attendees.

### Summary Of The Invention

The present invention meets the above described and other needs by providing systems, methods and interfaces for managing a meeting using a computer-implemented active agenda tool. In accordance with certain aspects of the invention, a method for managing a meeting with the inventive active agenda tool involves displaying an agenda interface which includes an agenda and a plurality of interactive controls. The agenda includes editable agenda items, each having a corresponding agenda item timer for recording time dedicated to that agenda item during the meeting. During the meeting, each agenda item is selected for discussion in a predetermined or user-specified order. When an agenda item is selected as the current agenda item for discussion, its corresponding agenda item timer is initiated in order to record the time dedicated to the discussion. The current agenda item is then marked as completed when the discussion is concluded. In response to marking the current agenda item as completed, its corresponding agenda item timer is stopped and the time dedicated to the discussion may be displayed.

A meeting timer may also be maintained to record the elapsed time of the meeting. Also, each agenda item may have a specified time limit. When an agenda item is marked as completed, a time differential between the time dedicated to the discussion and the specified time limit may be determined. The time differential may optionally be displayed in the agenda. As another optional feature, the time differential may be redistributed between one or more of the agenda items that are not marked as completed. Each agenda item is editable before, during and after the meeting. One or more of the agenda items may have associated collateral content that may be displayed during the meeting. Collateral content may be stored in a local memory location or in a remote memory location.

In accordance with certain other aspects of the present invention, a method is provided for managing a meeting that involves executing the active agenda tool at each of a plurality of networked computing devices. Each active agenda tool includes functionality for displaying an agenda interface and for maintaining a plurality of agenda item timers. The agenda interface includes an agenda and a plurality of interactive controls. The agenda includes a plurality of editable agenda items, each having a corresponding agenda item timer maintained by the agenda tool for recording time dedicated to that agenda item during the meeting.

Displayed agenda items correspond to agenda data that is stored on a computer-readable medium, either in a local or remote storage device. The agenda data may be changed or updated each time at least one of the displayed agenda items is modified during the meeting via one or more of the interactive controls. Any changes to the agenda data may then be distributed to each of the networked computing devices, so that each agenda tool can update its agenda during the meeting. An agenda item may be selected as the current agenda item for discussion and its corresponding agenda item timer may be initiated.

The current agenda item is marked as completed when the discussion is concluded. Marking the agenda item as completed causes the agenda data to be changed and such changes may be distributed to the networked computing devices. Agenda items may also be marked as postponed in order to defer a discussion related thereto and edited in various other manners. Marking the agenda item as postponed or otherwise editing the agenda item also causes the agenda data to be changed and such changes may be distributed to the networked computing devices.

Collateral content may be associated with one or more of the agenda items. The collateral content may be shared among each of the agenda tools by distributing a copy of the collateral content to each of the networked computing devices. Alternatively, the collateral content may be shared by providing within the agenda a link to a copy of the collateral content stored in a network storage device. These and other aspects, features and functions of the present invention will be more fully described below in the following detailed description of exemplary embodiments, with reference to the appended figures.

### Brief Description Of The Drawings

Fig. 1 is a block diagram illustrating a representative operating environment for implementation of certain exemplary embodiments of the present invention.

Fig. 2 a block diagram illustrating a representative networked operating environment for implementation of certain embodiments of the present invention.

Fig. 3 is an illustration of an exemplary agenda interface as it may exist prior to a meeting, in accordance with certain embodiments of the present invention.

Fig. 4 is an illustration of an exemplary agenda interface as it may exist during creation of an active agenda, in accordance with certain embodiments of the present invention.

Fig. 5 is an illustration of an exemplary agenda interface as it may exist while an agenda item is being edited during a meeting, in accordance with certain embodiments of the present invention.

Fig. 6 is an illustration of an exemplary agenda interface that includes interactive controls for editing agenda items and marking agenda items as postponed, in accordance with certain embodiments of the present invention.

Fig. 7 is an illustration of an exemplary agenda interface that includes interactive controls for associating collateral content with an agenda item, in accordance with certain embodiments of the present invention.

Fig. 8 is an illustration of an exemplary agenda interface that includes functionality for automatically redistributing time across agenda items, in accordance with certain embodiments of the present invention.

Fig. 9 is a process flow diagram illustrating an exemplary method for creating an active agenda in accordance with certain embodiments of the present invention.

Fig. 10 is a process flow diagram illustrating an exemplary method for managing a meeting using an active agenda in accordance with certain embodiments of the present invention.

### Detailed Description Of Exemplary Embodiments Of The Invention

The present invention provides systems, methods and interfaces for implementing an active agenda tool. Using the active agenda tool of the present invention, meeting participants are able to create an agenda prior to a meeting, add or modifying agenda items, change the order of agenda items, specify the relationships between agenda items, and specify the time limits for agenda items. Agenda items can be hierarchical, allowing for sub-agenda items. During the meeting, the active agenda tool displays the agenda and maintains timers to track the total elapsed time of the meeting and the time dedicated to each agenda item.

Each agenda item of the agenda may have a specified time limit indicating the intended amount of time to be dedicated to a related presentation or discussion. The sum of all agenda item time limits represents the meeting time limit. An agenda item may be made "active" when a related presentation or discussion is initiated. Making an agenda item active may involve, among other things, activating an agenda item timer to record the elapsed time dedicated to the agenda. Making an agenda item active may also involve displaying links or pointers to collateral content. As used herein, the term "collateral content" refers to any document, file, or other object that is associated with an agenda item.

During the meeting, agenda items may be selectively marked as "complete" when the related discussion is concluded. Agenda items may also be selectively marked as "postponed" if a discussion of that topic is to be deferred to a future time. Agenda items may also be selectively designated for follow-up discussion or other action items. The elapsed discussion time dedicated to a particular agenda item may be greater or less than a specified time limit for that agenda item. Accordingly, the time limits of remaining agenda items may be manually or automatically adjusted upward or downward, according to the difference between the elapsed time dedicated to an agenda item and the specified time limit of that agenda item, in order to preserve the meeting time limit.

In certain embodiments, the active agenda tool may be configured for managing on-line meetings between two or more connected devices. For example, each connected client device may execute an active agenda tool to display an agenda via an agenda interface. The constituent parts of the agenda, such as agenda items and their corresponding time limits and collateral content, if any, may be stored as agenda data items either in the local memory storage of one of the connected client devices or in a connected storage device. Each active agenda tool executed by a connected client device may include functionality for displaying an agenda interface template, managing timers, responding to user input, etc. Each active agenda tool may be further configured for receiving agenda data from another connected client device or from a connected server or storage device and for populating such agenda data into the agenda interface template to create an agenda interface for displaying the agenda. Modifications to the agenda data made at one connected device may be transmitted to the other connected devices, so that modifications to the agenda can be displayed in real time or near-real time.

Exemplary embodiments and operating environments of the present invention will now be described with continuing reference to the drawings, in which like numerals are intended to represent like elements throughout the several figures. Although exemplary embodiments of the present invention will be generally described in the context of software program modules and an operating system running on a personal computer, those skilled in the art will recognize that the present invention can also be implemented in conjunction with other program modules for other types of computer system configurations, including hand-held devices, multiprocessor systems, microprocessor based or programmable consumer electronics, network person computers, minicomputers, mainframe computers, and the like. Furthermore, those skilled in the art will recognize that the present invention may be implemented in a stand-alone or a distributed computing environment. In a distributed computing environment, program modules may be physically located in different local and remote memory storage devices. Examples of such distributed computing environments include local area networks, enterprise-wide computer networks, wide area networks and the global Internet.

In the detailed description that follows, the present invention is represented largely in terms of processes and symbolic representations of operations performed by conventional computer components, including processing units, memory storage devices, display devices, and/or input/output devices. In a distributed computing environment, the processes and operations described herein may be performed conventional distributed computer components, such as remote file servers, remote computer servers, remote memory storage devices and so on. The processes and operations performed by the computer include the manipulation of signals by a processing unit or remote server and the maintenance of these signals within data structures resident in one or more of the local or remote memory storage devices. Such data structures impose a physical organization upon the collection of data stored within a memory storage device and represent specific electrical or magnetic elements.

The present invention includes one or more computer program modules that embody the functions as described herein and as illustrated in the appended figures. However, it should be apparent that there could be many different ways of implementing the invention in computer programming, and the invention should not be construed as limited to any one set of computer program instructions. Further, a skilled programmer would be able to write computer program instructions to implement the disclosed invention without difficulty based on the figures and associated specification text, for example. Therefore, disclosure of a particular set of program code instructions is not considered necessary for an adequate understanding of how to make and use the present invention. The inventive functionality of the computer program will be explained in more detail in the following description in conjunction with the figures.

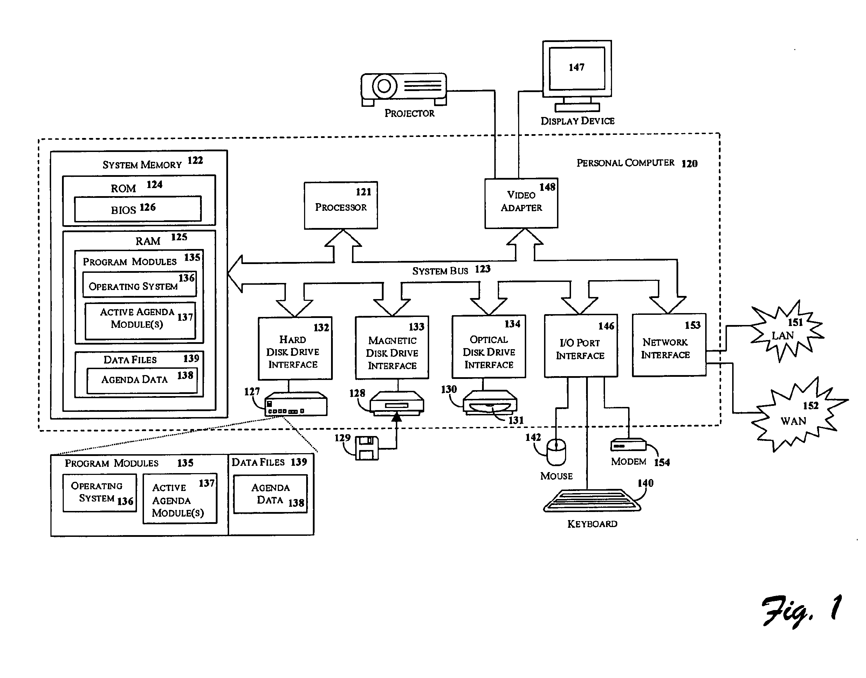

Fig. 1 illustrates a representative operating environment 100 for implementation of certain exemplary embodiments of the present invention. The exemplary operating environment 100 includes a general-purpose computing device in the form of a conventional personal computer 120. Generally, the personal computer 120 includes a processing unit 121, a system memory 122, and a system bus 123 that couples various system components including the system memory 122 to the processing unit 121. The system bus 123 may be any of several types of bus structures, including a memory bus or memory controller, a peripheral bus, or a local bus, using any of a variety of bus architectures. The system memory 122 includes a read-only memory (ROM) 124 and a random access memory (RAM) 125. A basic input/output system (BIOS) 126, containing the basic routines that help to transfer information between elements within the personal computer 120, such as during start-up, is stored in the ROM 124.

The personal computer 120 further includes a hard disk drive 127 for reading from and writing to a hard disk (not shown), a magnetic disk drive 128 for reading from or writing to a removable magnetic disk 129 such as a floppy disk, and an optical disk drive 130 for reading from or writing to a removable optical disk 131 such as a CD-ROM or other optical media. The hard disk drive 127, magnetic disk drive 128, and optical disk drive 130 are connected to the system bus 123 by a hard disk drive interface 132, a magnetic disk drive interface 133, and an optical disk drive interface 134, respectively. Although the exemplary operating environment 100 employs a ROM 124, a RAM 125, a hard disk drive 127, a removable magnetic disk 129, and a removable optical disk 131, it should be appreciated by those skilled in the art that other types of computer readable media which can store data that is accessible by a computer may also be used in the exemplary operating environment 100, such as magnetic cassettes, flash memory cards, digital video disks, Bernoulli cartridges, and the like. The drives and their associated computer readable media can provide nonvolatile storage of computer-executable instructions, data structures, program modules, and other data for the personal computer 120.

A number of software program modules 135 may be stored on the ROM 124, RAM 125, hard disk drive 127, magnetic disk 129, or optical disk 131, including an operating system 136 and various other program modules. Software program modules include routines, sub-routines, programs, objects, components, data structures, etc., which perform particular tasks or implement particular abstract data types. In accordance with an exemplary embodiment of the present invention, one or more active agenda program modules 137 (also collectively referred to herein as an "active agenda tool") may be stored within a suitable storage device of the personal computer 120. The one or more active agenda program modules 137 comprise computer-executable instructions for performing agenda-related functions, including but not limited to displaying agenda data, managing timers, providing interfaces for creating and modifying agenda items and managing collateral content, responding to user input commands, etc. Agenda data 138 may be stored in one or more data files 139, which may also reside in one or more suitable storage devices of the personal computer 120.

A user may enter commands and information to the personal computer 120 through input devices, such as a keyboard 140 and a pointing device 142. The pointing device 142 may include a mouse, a trackball, or an electronic pen that can be used in conjunction with an electronic tablet. Other input devices (not shown) may include a microphone, joystick, game pad, satellite dish, scanner, or the like. These and other input devices are often connected to the processing unit 122 through a serial port interface 146 that is coupled to the system bus 123, but may be connected by other interfaces, such as a parallel port, game port, a universal serial bus (USB), or the like. A display device 147, such as a monitor, may also be connected to system bus 123 via an interface, such as a video adapter 148. In addition to the display device 147, the personal computer 120 may include other peripheral output devices (not shown), such as speakers and a printer.

The personal computer 120 may operate in a networked environment using logical connections to one or more remote computers 149. The remote computer 149 may be another personal computer, a server, a client, a router, a network PC, a peer device, or other common network node. While the remote computer 149 typically includes many or all of the elements described above relative to the personal computer 120, only a memory storage device 150 has been illustrated in Fig. 1 for simplicity. The logical connections depicted in Fig. 1 include a local area network (LAN) 151 and a wide area network (WAN) 152. Such networking environments are commonplace in offices, enterprise-wide computer networks, intranets, and the Internet.

When used in a LAN networking environment, the personal computer 120 is often connected to the local area network 151 through a network interface or adapter 153. When used in a WAN networking environment, the personal computer 120 typically includes a modem 154 or other means for establishing communications over WAN 152, such as the Internet Modem 154, which may be internal or external, is connected to system bus 123 via serial port interface 146. In a networked environment, software program modules 135 depicted relative to personal computer 120, or portions thereof, may also be stored in the remote memory storage device 150. For example, the remote memory storage device 150 includes an e-mail client 155 and an Internet web browsing client 156. It will be appreciated that the network connections shown are exemplary and other means of establishing a communications link between the computers may be used.

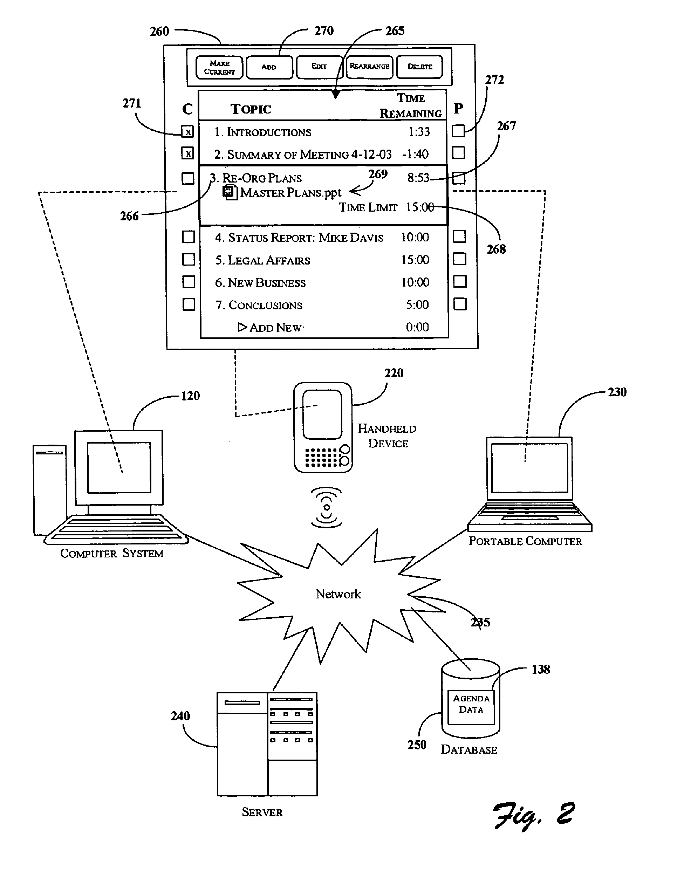

Referring now to Fig. 2, a block diagram is shown that further illustrates a representative networked operating environment for implementation of certain embodiments of the present invention. The representative networked operating environment includes two or more networked computing devices, such as a personal computer 120, a handheld device 220 (e.g., handheld computer, personal digital assistant, mobile phone, interactive pager, etc.), a portable computer 230 (e.g., laptop computer, table computer, etc.). Any number and type of networked computing devices may be included in the networked environment. The networked computing devices may operate as client and/or server devices. The exemplary network environment may also include a networked storage device, such as a database 250.

Networked devices typically communicate via a network 235, but may also or alternatively communicate via direct communication links, etc. The network 235 may include any communications and/or data network infrastructure. The network 235 may include wired and/or wireless communications mediums and may utilize any one or more suitable communication protocols. Those skilled in the art will be sufficiently familiar with computer networking that a more detailed explanation of the general principles involved is not warranted herein.

Each networked computing device may include some or all of the components described with respect to the personal computer 120 of Fig. 1, as well as additional or alternative components. At a minimum, each networked computing device includes at least a processor 121 for executing one or more active agenda program modules 137 and an output device (e.g., a display device 147) for presenting an agenda interface 260 to the user. Each networked device preferably, but not necessarily, includes its own local memory device, e.g. RAM 125, for storing such things as program modules 135 and data files 139. Thus, in certain embodiments, the active agenda program module(s) 137 may be stored and executed locally by each networked computing device. In other embodiments, the active agenda module(s) 137 may be stored and/or executed at a server 240 that is accessible by one or more networked client computing devices.

As mentioned above, the active agenda program module(s) 136 may include functionality for displaying an active agenda interface 260. As used herein, the term "active agenda interface" 260 is meant to refer to the graphical user interface representing an active agenda 265, including its agenda items 266 and any associated agenda timers 267, time limits 268, collateral content 269, etc., as well as all interactive controls, such as command buttons 270, check-boxes 271, interactive menus and the like. In accordance with certain embodiments, the active agenda program module(s) 137 may be configured to retrieve or receive an agenda interface template and agenda data 138 from a local or remote memory storage location. The active agenda program module(s) 137 may then populate relevant agenda data 138 into designated fields of the agenda interface template to create the active agenda interface 260.

An active agenda 265 may be created by a person facilitating a meeting or any other individual or group. Prior to the meeting, the agenda data 138 corresponding to the active agenda 265 may be stored in a local or remote memory storage location and may be shared, if desired, with proposed meeting attendees and/or others. Agenda data 138 may be stored in one or more data files 139. The active agenda 265 may be modified as many times as desired prior to the meeting, with each modification resulting in modified, deleted or added agenda data 138. Access privileges may be set to specify those individuals who are authorized to modify the active agenda 265.

When agenda data 138 is shared among computing devices, it may be delivered in the form of one or more complete data files 139. In certain embodiments, however, one or more of the networked computing devices may maintain a local copy of the agenda data 138, which makes it necessary to deliver only newly added, deleted or modified portions of the agenda data 138 to those devices. In such embodiments, selected agenda data items may be parsed from the agenda data 138 and may be delivered as a data file 139, data stream, etc. Those skilled in the art will be familiar with various software programs and method for synchronizing two or more data sources, any of which may be employed in connection with the present invention.

During a meeting, one of the networked computing devices may function as the meeting facilitator device and the other networked computing devices may function as meeting participant devices. Access privileges may be set for the active agenda 265 such that only the meeting facilitator device is authorized to make changes to the active agenda 265 during a meeting. Any modified or new agenda data 138 or an indication of deleted agenda data 138 may be transmitted from the meeting facilitator device to the other meeting participant devices, so that all meeting participants can view the modified active agenda 265. Otherwise, the meeting facilitator device may transmit any modified or new agenda data 138 or an indication of deleted agenda data 138 to a central storage location, such as a networked database 250, which can be periodically accessed by the meeting participant devices.

In other embodiments, one or more meeting participant devices could also be authorized to make changes to the active agenda 265 during a meeting. Any modified or new agenda data 138 or an indication of deleted agenda data 138 may be transmitted from the networked computing device at which the changes to the active agenda 265 were made to the other networked computing devices. Otherwise, the networked computing device that made changes to the agenda may transmit the modified or new agenda data 138 or an indication of deleted agenda data 138 to a central storage location for subsequent access by other networked computing devices. Changes made to an active agenda 265 during a meeting may include, but are not limited to, adding, deleting or editing agenda items 266, adding or removing collateral content 269 associated with an agenda item 266, increasing or decreasing agenda item time limits 268, marking agenda items 266 as "complete" or "postponed," indicating that follow-up actions are required for agenda items 266 and rearranging the order of agenda items 266.

The active agenda program module(s) 137 may include timer functions or may interface with a system clock managed by the operating system 136 of the computing device. Timers, which may include agenda timers 267 and a meeting timer, may or may not be displayed. By way of example only, the exemplary active agenda 265 shown in Fig. 2 display agenda item timers 267, but does not display a meeting timer. Displayed timers 267 may count upward from zero or may count downward from a specified time limit 268. In certain embodiments, the time limits 268 specified for agenda items 266 and for meetings are not "hard" time limits, meaning that the relevant timers 267 will continue to run after the allotted time has expired. Time in excess of the specified time limit may be indicated, for example by restarting the timer to count up from zero with a minus sign (-), a plus sign (+) or some other suitable indicator displayed beside the timer display. Those skilled in the art will appreciate that there are many other ways to implement and utilize timers, all of which are considered to be within the scope of the present invention.

In certain embodiments, the meeting facilitator device maintains and manages a meeting timer to track the elapsed and/or remaining time of the meeting and individual agenda item timers 267 to track elapsed and/or remaining discussion time dedicated to each agenda item 266. In such embodiments, the meeting facilitator device may periodically compare elapsed times to specified time limits 268 to determine the meeting time remaining and/or the discussion time remaining for an agenda item 266. Remaining-time values may be transmitted to other meeting participant devices as updated agenda data items. In other embodiments, each meeting participant device may maintain and manage its own timer or timers to track elapsed and/or remaining meeting time and elapsed and/or remaining discussion time dedicated to agenda items 266. In such other embodiments, the timers maintained by different networked computing devices may optionally be synchronized from time to time.

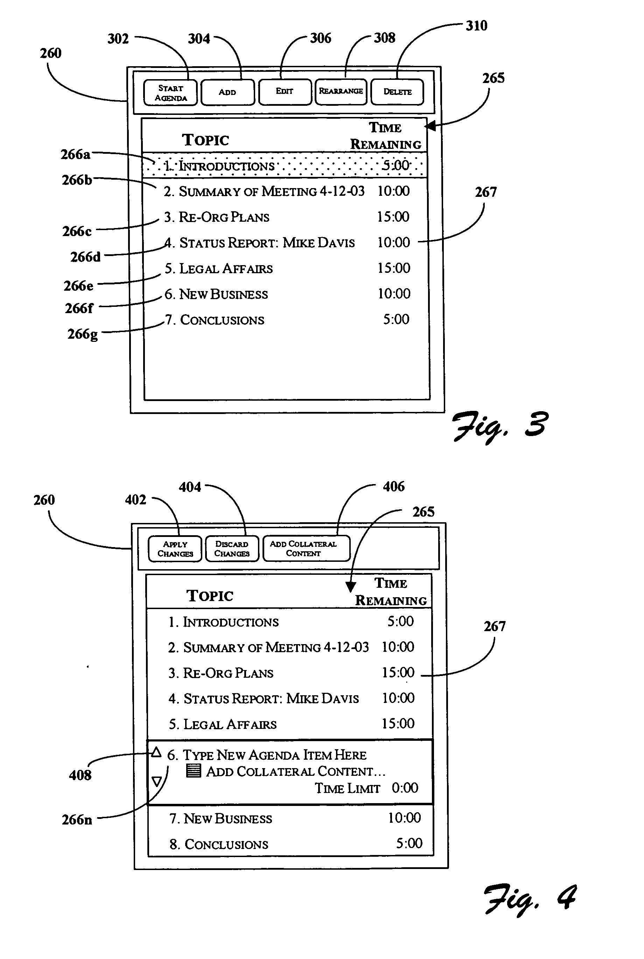

The functionality and utility of the active agenda tool of the present invention will be more fully understood by those skilled in the art after an examination of the representative active agenda interfaces shown in Figs. 3 - 8, in conjunction with the following description thereof. In Fig. 3, an exemplary agenda interface 260 is shown as it may exist prior to a meeting. The exemplary agenda interface 260 displays an active agenda 265 and various interactive controls 270, such as a "Start Agenda" button 302 (which may toggle to "Stop Agenda") for activating and deactivating agenda and meeting timers, an "Add" button 304 for adding an agenda item 266, an "Edit" button 306 for invoking an edit mode to edit a selected agenda item 266, a "Rearrange" button 308 for changing the position of a selected agenda item 266, and a "Delete" button 310 for deleting a selected agenda item 266. Selected or "current" agenda items 266 may be indicated by way of high-lighting or some other visual differentiator.

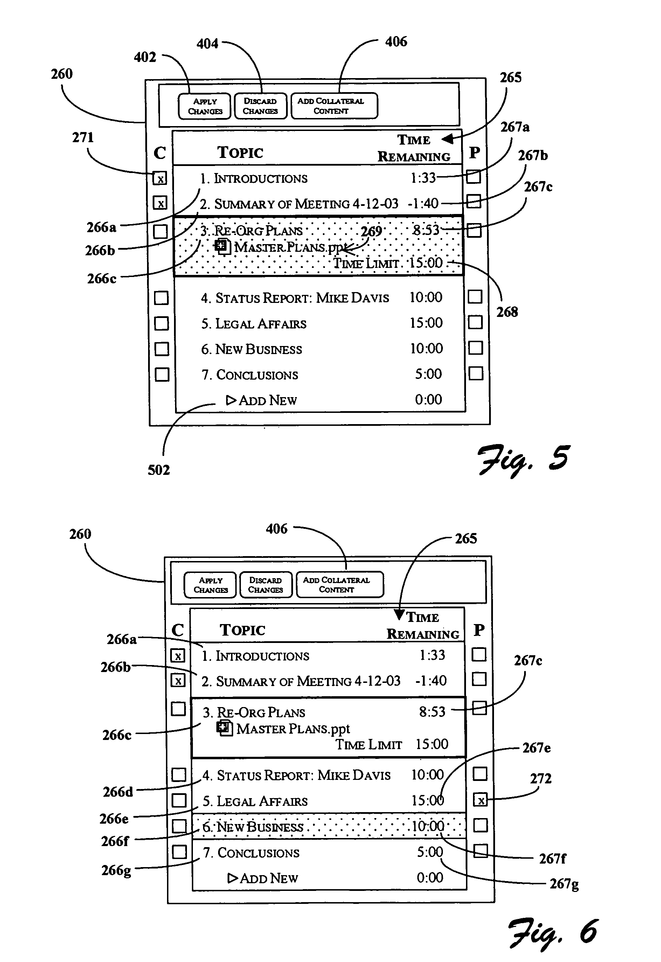

The exemplary agenda interface 260 also displays checkboxes 271 that may be checked, during the meeting, to indicate that a discussion relating to the corresponding agenda item 266 has been concluded. Agenda items 266 may be displayed, for example, in outline form and each agenda item 266 may have a corresponding agenda item timer 267. In the example of Fig. 3, agenda item timers 267 count down from the specified time limit 268 and therefore display time remaining for each agenda item 266. Extra time dedicated to an agenda item is indicated, in this example, with a minus sign (-)(see Fig. 4). The representative active agenda 265 of Fig. 3 includes seven agenda items 266a-g.

In certain embodiments, agenda items 266 may be stored as agenda data 138 in the form of an attributed data structure. Those skilled in the art will recognize that data structure attributes may be implemented as fields into which text or other values may be entered or in which flags may be set. Agenda item attributes may thus include a "complete" attribute in which a flag may be set to indicate that the agenda item has been marked complete; a "topic" attribute in which text may be entered to identify the agenda item; a "time limit" attribute into which a time limit 268 for the agenda item may be entered; a "current" attribute in which a flag may be set to indicate that the agenda item is active during a meeting; and a "collateral content" attribute in which a link or pointer to one or more collateral content items 269 may be inserted. Agenda items attributes may be set to default values, if desired. Those skilled in the art will appreciate that there are many other suitable ways to structure agenda data 138. Accordingly, the present invention is not intended to be limited to any particular form of data structure or data storage method.

Fig. 4 is an illustration of an exemplary agenda interface 260 as it may exist during creation of an active agenda 265. The exemplary agenda interface 260 of Fig. 4 is displayed in response to activation of the "Add" button 304 shown in Fig. 3. The interactive controls 270 displayed while a new agenda item 266n is being added and/or edited may include an "Apply Changes" button 402 for saving the new agenda item 266n, a "Discard Changes" button 404 for deleting the new agenda item 266n or rejecting modifications to the new agenda item 266n, and an "Add Collateral Content" button 406 for associating collateral content with the new agenda item 266n. As shown in the example of Fig. 4, when a new agenda item 266n is added, default attributes are displayed. In this example, the default "topic" attribute is represented by the string *'Type New Agenda Item Here,'* the default "time limit" attribute is set to the value *`0:00,'* and a default string *'Add New Collateral Content'* is displayed as the "collateral content" attribute. The user may interact with the new agenda item 266n to change the default attributes as desired. Interactive controls, such as arrow controls 408 or the like, may optionally be provided for changing the position of the new agenda item 266n within the active agenda 265. In this example, it will be assumed that the "Discard Changes" button 404 is activated, so as to reject the new agenda item 266n. When the "Discard Changes" button 404 is activated the display reverts to the exemplary agenda interface 260 shown in Fig. 3.

Fig. 5 is an illustration of an exemplary agenda interface 260 as it may exist while an agenda item 266c is being edited during a meeting. In this example, it is assumed that the active agenda 265 of Fig. 3 has been started by activation of the "Start Agenda" button 302. As shown, check boxes 271 corresponding to the first agenda item 266a and the second agenda item 266b have been checked to mark those items as complete. The first agenda item 266a was completed with 1 minute 33 seconds remaining on its agenda item timer 267a and the second agenda item 266b was completed after its allotted 10 minutes of discussion time plus an additional 1 minute 40 seconds. The agenda item timer 267b corresponding to the second agenda item 266b displays "-1:40" to indicate the extra time.

When an agenda item 266, for example the third agenda item 266b, is marked complete, its corresponding agenda timer 267b is stopped and, by default, the next agenda item 266c may become current and active (i.e., its agenda timer 267 is initiated). An agenda item 266 other than the next successive agenda item 266c could also be manually activated if desired. In alternative embodiments, the active agenda module(s) 137 may be configured to await a user input command, such as a mouse click or the like, to indicate which agenda item 266 is the next to be made active.

The present example also assumes that the "Edit" button 306 (shown in Fig. 3) was activated with 8 minutes 53 seconds of discussion time remaining on the third agenda item timer 267. Activation of the "Edit" button 306 stops the agenda item timer 267c, causes the specified agenda item time limit 268 to be displayed, and caused the "Apply Changes" button 402, the "Discard Changes" button 404 and the "Add Collateral Content" button 406 to be displayed. In certain embodiments, activation of the "Edit" button 306 may also stop the meeting timer. In certain embodiments the active agenda interface 260 may include "right-click" functionality for opening context menus. A context menu may provide another interactive control 270 for invoking the agenda item edit mode or for adding, deleting, rearranging, etc. selected agenda items 266.

While editing an agenda item 266, for example the third agenda item 266c, the corresponding agenda item time limit 268 can be reset to a different time value. Other agenda items 266 may also be edited to manually redistribute any remaining time, if desired. In the agenda item edit mode, an "Add New" control 502 may be provided for adding a new agenda item 266. In the example of Fig. 5, the third agenda item 266c includes a PowerPoint file as collateral content 269. Those skilled in the art will appreciate that any type of file or object can constitute collateral content 269. Collateral content 269 may be stored and displayed locally by each computing device participating in the meeting, or may be stored at a remote storage for retrieval before, during and/or after the meeting. For the purposes of this present example, it will be assumed that no additional collateral content 269 is added to the third agenda item 266c and that the edit mode is terminated by activation of the "Discard Changes" button 402, which causes the display to revert to the exemplary agenda interface 260 shown in Fig. 3.

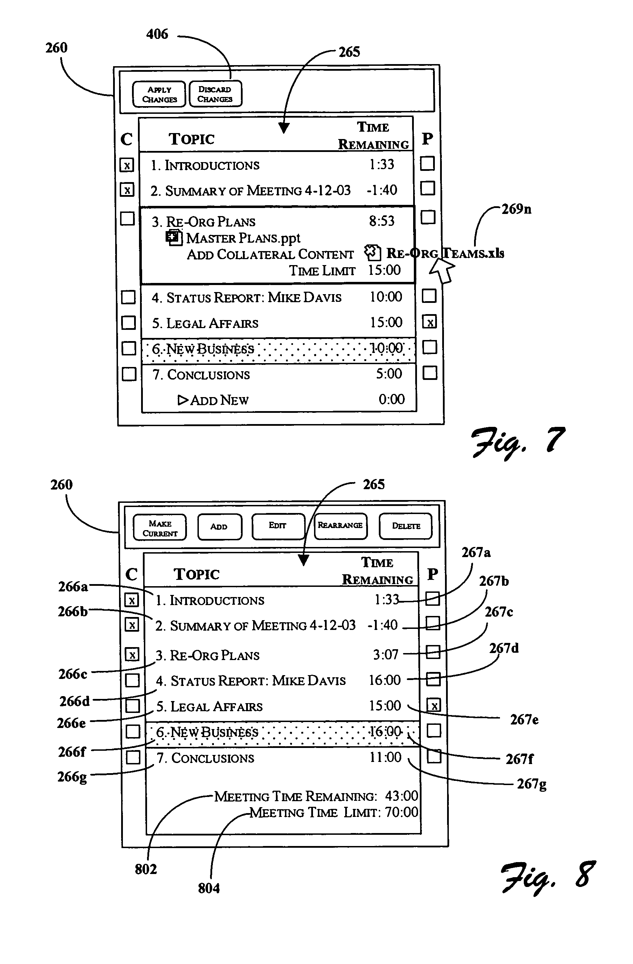

Fig. 6 continues the examples discussed above and shows that a second set of check boxes 602 may be provided for marking agenda items 266 as postponed. A postponed agenda item 266, for example the fifth agenda item 266g, may be one that will not be discussed during the meeting. The time remaining on the agenda item timer 267g corresponding to a postponed agenda item 266g may be subtracted from the meeting time or may be redistributed among the other non-completed and non-postponed agenda items 266. In certain embodiments, though not illustrated in the figures, marking an agenda item 266g as postponed may also cause a follow-up action item to be established. The follow-up action item may be, for example, an email or prompt presented to the meeting facilitator at a later time as a reminder to include the postponed agenda item 266g in a subsequent active agenda 265.

In certain embodiments, follow-up action items may be established for any agenda item 266, whether or not postponed, completed or active. As described, follow-up action items may be automated by the agenda program module(s) 137 (e.g., generating an email or prompt after a certain time interval or forwarding a document or file to a meeting participant.) In that case, the active agenda program module(s) 137 may include functionality for performing the follow-up action items or may interface with other program modules 135 (e.g., an email client, calendar application, application server) to manage or request the performance of follow-up action items. Follow-up action items may also be performed by the meeting facilitator, or another person. Accordingly, establishing a follow-up action item for an agenda item 266 may involve associating a note or comment with the agenda item 266 as a reminder that a follow-up action is required.

The exemplary agenda interface 260 of Fig. 6 also illustrates that an agenda item 266, for example the third agenda item 266c, may be edited even when it is not the "current" agenda item 266. In this example, the first two agenda items 266a-b were completed, the third agenda item 266c was skipped or "paused" with 8 minutes 53 seconds remaining on its agenda item timer 267c, the fourth agenda item 266d was skipped and the fifth agenda item 266e was postponed. Upon postponement of the fifth agenda item 266e, the sixth agenda item 266f became the current agenda item 266. However, before the agenda item timer 266f of the sixth agenda item 266f became active, the user activated the "Edit" button 306 (shown in Fig. 3) and selected the third agenda item 266c for editing.

Fig. 7 illustrated an exemplary agenda interface 260 that may be displayed in response to activation of the "Add Collateral Content" button 406 (see Fig. 6) when an active agenda item 266c is being edited. Activation of the "Add Collateral Content" button 406 may cause the active agenda program module(s) 137 to interface with a local and/or remote file system (not shown) to allow the user to select new collateral content 269n. The active agenda program module(s) 137 may include "drag-and-drop" functionality for adding new collateral content 269n to an agenda item 266c. Drag-and-drop functionality is widely understood in the art and is therefore not discussed further herein. Any other suitable methods for adding collateral content 269 to an agenda item 266 may be incorporated into the present invention. For the purposes of this present example, it will be assumed that any changes to the third agenda item 266c (e.g., the addition of the new collateral content 268n) are accepted by activation of the "Apply Changes" button 402, which causes the display to revert to the exemplary agenda interface 260 shown in Fig. 3. Any applied changes may be transmitted to any other networked computing devices participating in the meeting, so as to update each connected active agenda 265.

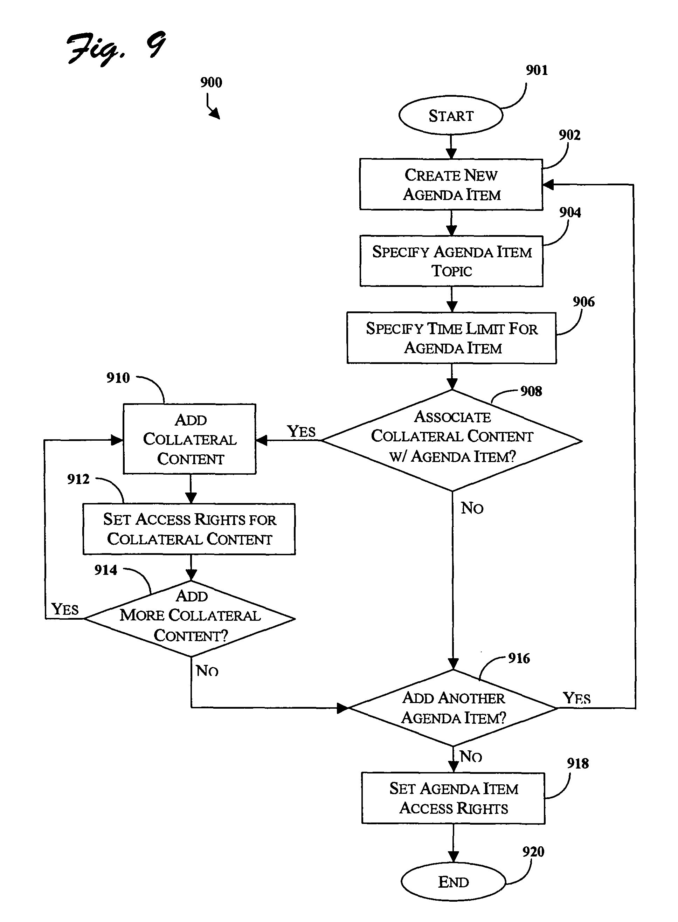

Fig. 8 illustrates an exemplary agenda interface 260 demonstrating that, in certain embodiments, the active agenda program module(s) 137 may include functionality for automatically redistributing time across non-complete and non-postponed agenda items 266. The active agenda program module(s) 137 may be configured to periodically redistribute "extra" time or may be configured to do so in response to an agenda item 266 being marked complete. Extra time may refer to the net time remaining on any agenda item timers 267 corresponding to completed or postponed agenda items. Fig. 8 also illustrates that a meeting timer 802 and a meeting time limit value 804 may optionally be displayed in an active agenda 265. In the illustrated example, the meeting timer 802 counts down from the meeting time limit value 804. The meeting time limit value 804 could be modified in the edit mode, if such a feature is desired.

In the example of Fig. 8, the active agenda program module(s) 137 are configured to redistribute extra time on a periodic basis. Prior to the first time redistribution, the first agenda item 266a is completed with 1 minute 33 seconds remaining on its agenda item timer 267a, the second agenda item 266b is completed with -1 minute 33 seconds remaining on its agenda item timer 267b, and the third agenda item 266c is completed with 3 minutes 07 seconds remaining on its agenda item timer 267c. Thus, the first three agenda items 266a-c result in a net of 3 minutes 00 seconds extra time. Also prior to the first time redistribution, the fifth agenda item 266e is postponed. The postponed agenda item 266e adds an additional 15 minutes (i.e., the amount of time remaining on its agenda item timer 267e) of extra time to the meeting, resulting in a total of 18 minutes 00 seconds of net extra time.

Upon the first redistribution of extra time, the fourth agenda item 266d, the sixth agenda item 266f and the seventh agenda item 266g remain uncompleted and not postponed. In the example of Fig. 8, the active agenda module(s) are configured to redistribute extra time evenly across any uncompleted and not postponed agenda items 266d, 266f & 266g. Thus, in the present example 6 minutes 00 seconds of extra time is added to each of the uncompleted and not postponed fourth agenda item 266d, sixth agenda item 266f and seventh agenda item 266g. In other embodiments, extra time may be redistributed in proportion to the relative length of time remaining on the agenda item timers 267 corresponding to uncompleted and not postponed agenda items 266. Other methods for redistributing extra time will occur to those of skill in the art. In still other embodiments, net extra time may be deducted from the meeting time limit value 804, there decreasing the overall time of the meeting.

Fig. 9 is a process flow diagram illustrating an exemplary method for creating an active agenda. The exemplary method 900 assumes that an agenda interface is displayed and that an edit/create mode has been invoked (see, for example, Fig. 4). The method begins at starting block 901 and progresses to step 902, where a new agenda item is created. As previously described an agenda item may have several attributes, such as a "topic" attribute, a "time limit" attribute, a "complete" attribute, a "current" attribute, a "postponed" attribute, a "collateral content" attribute, etc.

Upon creation, the agenda item attributes may be set to default values. Certain attributes, such as the "topic," "time" limit" and "collateral content" attributes may be specified by the user during the creation of the agenda item. Accordingly, after the agenda item is created, the method moves to step 904, where the agenda item topic is specified. Then at step 906, an agenda item time limit may be specified.

Following on to step 908, a determination is made as to whether any collateral content is to be associated with the agenda item. If no collateral content is to be associated with the agenda item, the method skips ahead to step 916, which is described below. If collateral content is to be associated with the agenda item, the method advances to step 910, where a first collateral content item is specified. Specifying a collateral content item may involve attaching a file or other object to the agenda item or associating with the agenda item a link to the file or object. Such a link may be a hyperlink or a pointer to a local or remote memory storage location.

After a collateral content item is associated with the agenda item at step 910, access rights for the collateral content item may be set at step 912. Specific access rights may, for example, provide read, write and/or edit privileges to one or more specific meeting participants or one or more types of meeting participants (e.g., management-level participants, work-group members, etc.) Meeting participants may be identified, for the purpose of setting access rights, by usemame, email alias, personal identification number, or some other suitable identifier. Access rights may also be set or modified during a meeting, if such flexibility is desired. Access rights may be set to default values, if desired. Access rights thus can allow the collateral content item to be shared among some or all of the meeting participants.

A shared collateral content item may be made available to some or all of the meeting participants for viewing and/or editing. Thus, meeting participants who view the active agenda on their own computing device prior to, during or after the meeting are able to access a shared collateral content item that may be or may have been referenced during the meeting. Those skilled in the art will appreciate that sharing a collateral content item may involve providing a copy of the item to each meeting participant or providing shared access to the item stored in a common storage location, such as a network database. A collateral content element that is not shared is accessible only by the meeting facilitator (or other designated individual) and can be displayed by that individual during the meeting if desired.

After setting access rights at step 912, the method proceeds to step 914. At step 914, a determination is made as to whether another collateral content item is to be added. If so, the method returns to step 910, where another collateral content item is selected. After adding another collateral content item, the method is repeated, as described above, from step 912 to step 914 until it is determined at step 914 that no additional collateral content items are to be added. When it is determined at step 914 that no additional collateral content items are to be added, the method advances to step 916.

At step 916 a determination is made as to whether another agenda item is to be added to the active agenda. If another agenda item is to be added, the method returns to step 902, where a new agenda item is created. After the new agenda item is created at step 902, the method is repeated from step 904 to step 916, as described above, until it is determined at step 916 that no additional agenda items are to be added to the active agenda. When it is determined at step 916 that no additional agenda items are to be added, the method advances to step 918.

At step 918 access rights may optionally be set for the active agenda. Again, access rights may provide read, write, and/or modify rights for one or more selected meeting participants or other individuals. Thus, the creator of the active agenda may use access rights, if desired, to ensure that only select individuals have the authority to modify the active agenda. Agenda access rights may be set or changed during a meeting, if such flexibility is desired.

Agenda access rights may constitute agenda-level attributes. In other embodiments, access rights may be specified for individual agenda items and may constitute additional agenda item attributes. Access rights may be set to a default value if desired. After agenda access rights are set (or not set) at step 918, the method ends at step 920.

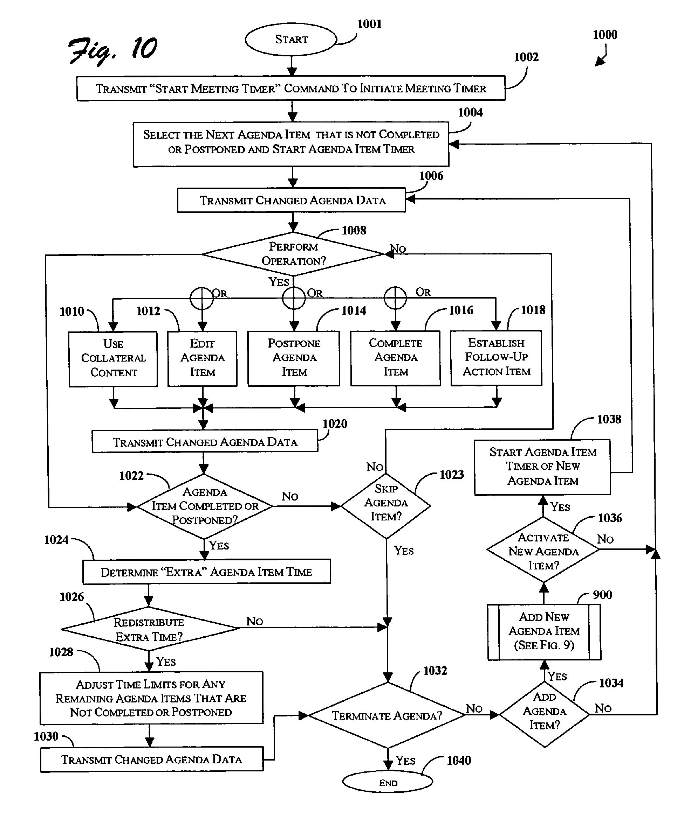

Fig. 10 is a process flow diagram illustrating an exemplary method for managing a meeting using an active agenda. The meeting in the following example may involve a single computing device executing an active agenda tool. Alternatively, the meeting in the following example may be an on-line meeting between two or more connected computing devices, each executing an active agenda tool of the present invention. The active agenda tools executed by each connected computing device may be referred to herein as "connected active agendas" for brevity. The exemplary method 1000 assumes that an active agenda interface is displayed on each computing device connected to the meeting. The method begins at starting block 1001 and progresses to step 1002, where the meeting is initiated with the issuance of a command "start meeting timer" command to any connected active agendas.

Once the meeting timer is started, the method moves to step 1004, where the next agenda item that is not completed and not postponed is selected. Obviously, when the active agenda is activated for the first time, no agenda items will be completed or postponed. Selection of the agenda item activates its agenda item timer. In certain embodiments, a user input command may be provided to override that automatic selection of an agenda item.

Selection of an agenda item and activation of its agenda item timer may be recorded as changes to the agenda data. Any changes to the agenda data may be transmitted to all connected active agendas at step 1006, so that each active agenda may be updated accordingly. Next at step 1008, a determination is made as to whether the meeting facilitator or other authorized user desires to perform an operation on the selected agenda item. By way of example, the authorized user may be presented with the option to (i) use any collateral content items associated with the agenda item, (ii) edit the agenda item, (iii) postpone the agenda item for a later meeting, (iv) complete the agenda item, or (v) establish a follow-up action item for the agenda item.

If it is determined at step 1008 that the authorized user does not choose to perform an operation on the selected agenda item, the method skips ahead to step 1022 to determine if the selected agenda item has been marked as completed or postponed. The selected agenda item may be marked as completed or postponed, for example, when the discussion or presentation relating to that agenda item is concluded or deferred to a later time. As long as the agenda item has not been marked as completed or postponed, the method returns to step 1008 to again determine whether an operation is to be performed on the selected agenda item.

If it is determined at step 1008 that the authorized user chooses to perform an operation on the associated collateral content, the method moves to step 1010. At step 1010 the authorized user is able to display and/or interact with the collateral content as desired. Next the method advances to step 1020, where any changed agenda data resulting from the use of the collateral content is transmitted to any connected active agendas. From step 1020, the method proceeds to step 1022 to determine if the selected agenda item has been marked as completed or postponed. As long as the agenda item has not been marked as completed or postponed, the method returns to step 1008 to determine whether another operation is to be performed on the selected agenda item.

If it is determined at step 1008 that an edit operation is to be performed on the selected agenda item, the method moves to step 1012. At step 1012 the authorized user is able to edit the agenda item topic, add collateral content, add sub-agenda items, change the agenda time limit, reset the agenda item timer, etc. From step 1012, the method moves to step 1020, where any changed agenda data caused by editing the selected agenda item is transmitted to any connected active agendas. As described above, the method advances from step 1020 to step 1022 for a determination as to whether the selected agenda item has been marked as completed or postponed. As long as the agenda item has not been marked as completed or postponed, the method returns to step 1008 to determine whether another operation is to be performed on the selected agenda item.

If it is determined at step 1008 that the authorized user desires to perform an operation to establish a follow-up action item for the selected agenda item, the method moves to step 1014. At step 1014 the authorized user interacts with the provided user interface controls to establish the desired follow-up action item. As described previously, a follow-up action item may be an automated task performed or managed by the active agenda tool, or may be a reminder note or comment attached to the agenda item. Other types of follow-up action items are equally possible. From step 1014, the method moves to step 1020, where any changed agenda data caused by establishing the follow-up action item is transmitted to any connected active agendas. As described above, the method advances from step 1020 to step 1022 for a determination as to whether the selected agenda item has been marked as completed or postponed. As long as the agenda item has not been marked as completed or postponed, the method returns to step 1008 to determine whether another operation is to be performed on the selected agenda item.

If it is determined at step 1008 that the authorized user desires to perform a postpone operation on the selected agenda item, the method proceeds to step 1016. At step 1016 the agenda item is marked as postponed. It is assumed in this example that a postponed agenda item is to be ignored for the duration of the present meeting, but possibly revisited at a later meeting. In other embodiments, postponed agenda items may be revisited during the present meeting if desired. From step 1016, the method proceeds to step 1020, where any changed agenda data caused by marking the selected agenda item as postponed is transmitted to any connected active agendas. As described above, the method advances from step 1020 to step 1022 for a determination as to whether the selected agenda item has been marked as completed or postponed. When it is determined at step 1022 that the selected agenda item has been marked as postponed, the method advances to step 1024, which is described below.

If it is determined at step 1008 that the authorized user desires to perform a completion operation on the selected agenda item, the method proceeds to step 1018. At step 1018 the agenda item is marked as completed. It is assumed in this example that a completed agenda item will not be revisited during the present meeting, though it would be possible to implement such a feature if desired. From step 1018, the method advances to step 1020, where any changed agenda data caused by marking the selected agenda item as completed is transmitted to any connected active agendas. As described above, the method advances from step 1020 to step 1022 for a determination as to whether the selected agenda item has been marked as completed or postponed. When it is determined at step 1022 that the selected agenda item has been marked as completed, the method advances to step 1024, which is described below.

At step 1024 any "extra" time remaining for the completed agenda item is determined. As one example, "extra" time may be a positive value representing unused time allotted to the agenda item, or may be a negative value representing the amount of time by which an agenda time limit was exceeded. Extra time may optionally be displayed in the active agenda. Each connected active agenda may independently determine extra time, so it may not be necessary to transmit changed agenda data at this point. Conversely, it may be desirable to transmit changed agenda data relating to extra time, so as to synchronize each connected active agenda.

After extra time is determined at step 1024, a determination is made at step 1026 as to whether extra time should be redistributed to remaining agenda items. Extra time may be redistributed, so as to preserve a specified meeting time limit. Extra time may be redistributed upon completion of each agenda item, or at designated time intervals. Of course, it may be desirable not to redistribute extra time at all.

If it is determined at step 1026 that extra time is not to be redistributed, the method proceeds to step 1032, which is explained below. However, if it is determined at step 1026 that extra time is to be redistributed, the method proceeds to step 1028, where the time limits of each agenda item that is not completed and not postponed are adjusted. Time limits may be adjusted in equal amounts with the extra time being evenly divided or may be adjusted in proportion to the relative durations of the time limits. After redistributing extra time at step 1028, the method proceeds to step 1030, where any changed agenda data caused by redistributing extra time is transmitted to any connected active agendas. From step 1030, the method moves to step 1032, which is described below.

At 1032 a determination is made as to whether all agenda items have been marked as completed or postponed. If there are any agenda items that have not been marked completed or postponed, the method returns to step 1004, where the next agenda item that is not completed or postponed is selected. Selection of the next agenda item initiates its agenda item timer. Following step 1004, the method is repeated from step 1006 to step 1032, as described above, until it is finally determined that all agenda items have been marked as either completed or postponed. When it is finally determined at step 1032 that all agenda items have been marked as either completed or postponed, the method ends at step 1034.

Based on the foregoing, it can be seen that the present invention provides systems, methods and interfaces for an active agenda tool used for managing meetings. Many other modifications, features and embodiments of the present invention will become evident to those of skill in the art. For example, the agenda tool of the present invention may itself be implemented as collateral content associated with another object, such as an email message. It should also be appreciated, therefore, that many aspects of the present invention were described above by way of example only and are not intended as required or essential elements of the invention, unless explicitly stated otherwise. In particular, the above described graphical user interfaces, interactive controls, data structures, and process flows were provided strictly by way of illustration and are not intended to be, in and of themselves, limitations of the present invention. Accordingly, it should be understood that the foregoing relates only to certain embodiments of the invention and that numerous changes may be made therein without departing from the spirit and scope of the invention as defined by the following claims.

## Claims

1. A method for managing a meeting using a computer-implemented agenda tool comprising:
executing the agenda tool at each of a plurality of networked computing devices, the agenda tool including functionality for displaying an agenda interface and for maintaining a plurality of agenda item timers;
wherein the agenda interface comprises an agenda and a plurality of interactive controls, the agenda comprising a plurality of editable agenda items each having a corresponding agenda item timer maintained by the agenda tool for recording time dedicated to the agenda item during the meeting;
wherein the displayed agenda items correspond to agenda data stored on a computer-readable medium, the agenda data being changed each time at least one of the agenda items is modified during the meeting via one or more of the interactive controls; and
wherein changes to the agenda data are distributed to each of the networked computing devices, so that each agenda tool can update its agenda during the meeting.

2. The method of claim 1, further comprising the steps of:
selecting one of the agenda items as the current agenda item and initiating the corresponding agenda item timer to record time dedicated to a discussion of the current agenda item during the meeting; and
marking the current agenda item as completed when the discussion is concluded,
wherein marking the agenda item as completed causes the agenda data to be changed.

3. The method of claim 2, wherein the current agenda item has a specified time limit; and
wherein the method further comprises the steps of determining a time differential between the time dedicated to the discussion and the specified time limit, and displaying the time differential in the agenda.

4. The method of claim 3, further comprising the step of redistributing the time differential between one or more of the agenda items that are not marked as completed.

5. The method of claim 1, further comprising the step of selecting one of the agenda items as the current agenda item and marking the current agenda item as postponed in order to defer a discussion related to the current agenda item; and
wherein marking the agenda item as postponed causes the agenda data to be changed.

6. The method of claim 5, wherein the current agenda item has a specified time limit indicating an amount of time allotted for the discussion, and
wherein the method further comprises the step of redistributing the amount of time allotted for the discussion between one or more of the agenda items that are not marked as completed or postponed.

7. The method of claim 1, wherein each agenda tool further includes functionality for maintaining a meeting timer for recording the elapsed time of the meeting.

8. The method of claim 1, wherein one or more of the agenda items has associated collateral content that may be displayed during the meeting.

9. The method of claim 8, wherein the collateral content is shared among each of the agenda tools.

10. The method of claim 9, wherein the collateral content is shared by distributing a copy of the collateral content to each of the networked computing devices

11. The method of claim 9, wherein the collateral content is shared by providing within the agenda a link to a copy of the collateral content stored in a network storage device.

12. A computer-implemented agenda tool for managing a meeting comprising:
computer-executable instructions for displaying an agenda interface and for maintaining a plurality of agenda item timers, wherein the agenda interface comprises an agenda and a plurality of interactive controls and wherein the agenda comprises a plurality of editable agenda items each associated with a corresponding agenda item timer for recording time dedicated to the agenda item during the meeting;
computer executable instructions for storing and retrieving agenda data corresponding to the displayed agenda items and for changing the agenda data each time at least one of the agenda items is modified during the meeting via one or more of the interactive controls; and
computer-executable instructions for distributing any changes to the agenda data to each of a plurality of networked computing devices participating in the meeting.

13. The agenda tool of claim 12, further comprising computer-executable instructions for:
selecting one of the agenda items as the current agenda item and initiating the corresponding agenda item timer to record time dedicated to a discussion of the current agenda item during the meeting; and
marking the current agenda item as completed when the discussion is concluded,
wherein marking the agenda item as completed causes the agenda data to be changed.

14. The agenda tool of claim 13, wherein the current agenda item has a specified time limit; and
wherein the agenda tool further comprises computer-executable instructions for determining a time differential between the time dedicated to the discussion and the specified time limit, and displaying the time differential in the agenda.

15. The agenda tool of claim 14, further comprising computer-executable instructions for:
redistributing the time differential between one or more of the agenda items that are not marked as completed.

16. The agenda tool of claim 12, further comprising computer-executable instructions for maintaining a meeting timer for recording the elapsed time of the meeting.

17. The agenda tool of claim 12, further comprising computer-executable instructions for associating collateral content with one or more of the agenda items and for displaying the collateral content during the meeting.

18. A method for managing a meeting using a computer-implemented agenda tool comprising:
displaying an agenda interface comprising an agenda and a plurality of interactive controls, wherein the agenda comprises a plurality of editable agenda items each having a corresponding agenda item timer for recording time dedicated to the agenda item during the meeting; and
for each agenda item that is not marked as completed, performing the following steps:
selecting the agenda item as the current agenda item and initiating its corresponding agenda item timer to record time dedicated to a discussion of the current agenda item during the meeting;
marking the current agenda item as completed when the discussion is concluded; and
in response to marking the current agenda item as completed, stopping its corresponding agenda item timer and displaying the time dedicated to the discussion.

19. A computer-readable medium having stored therein computer-executable instructions for performing the method of claim 18.

20. The method of claim 18, further comprising the step of maintaining a meeting timer to record the elapsed time of the meeting.

21. The method of claim 18, wherein the current agenda item has a specified time limit; and
wherein the method further comprises the steps of determining a time differential between the time dedicated to the discussion and the specified time limit, and displaying the time differential in the agenda.

22. The method of claim 21, further comprising the step of redistributing the time differential between one or more of the agenda items that are not marked as completed.

23. The method of claim 18, wherein one or more of the agenda items has associated collateral content that may be displayed during the meeting.
